# NEUE EUROPÄISCHE PATENTSCHRIFT

(11) **EP 1 260 661 B2**
(45) Veröffentlichungstag und Bekanntmachung des Hinweises auf die Entscheidung über den Einspruch: **02.05.2012**
(45) Hinweis auf die Patenterteilung: 01.03.2006
(21) Anmeldenummer: 02008617.9
(22) Anmeldetag: 17.04.2002
(51) Int. Cl.: E05D 15/52, E05C 9/06

(54) **Treibstangen-Montagesatz, entsprechendes Dreh-Kipp-Fenster oder -Tür und Verfahren zur Montage eines derartigen Montagesatzes**
Drive rod mounting assembly, corresponding tilt-turn window or door, and method for mounting such an assembly
Ensemble de montage de tiges d'actionnement; fenêtre ou porte oscillo-battante correspondante et procédé de montage d'un tel ensemble

(30) Priorität: 26.05.2001 DE 10125803
(43) Veröffentlichungstag der Anmeldung: 27.11.2002
(73) Patentinhaber: ROTO FRANK AG, 70771 Leinfelden-Echterdingen (DE)
(72) Erfinder: Kurth, Martin, Dr., 72768 Reutlingen (DE)
(74) Vertreter: Gleiss & Grosse

(56) Entgegenhaltungen:
- EP-A- 0 886 026
- EP-A- 0 988 922
- EP-A- 1 095 729
- EP-B- 0 883 723
- DE-A- 19 602 025
- DE-A1- 19 607 366
- DE-U- 20 008 856
- FR-A- 2 131 736
- GB-A- 2 347 455

## Beschreibung

Die Erfindung betrifft einen Treibstangenbeschlag-Montagesatz, insbesondere für einen Dreh-Kipp-Flügel eines Fensters, einer Tür oder dergleichen, enthaltend eine Mehrzahl an Eckumlenkungen, an Getriebe- und/oder Axerstulpelementen und an Verbindungselementen, wobei ein entsprechendes Verbindungselement in Abhängigkeit des jeweils vorliegenden Flügelformats gegebenenfalls zwischen einer Eckumlenkung und einem zugehörigen Getriebe- oder Axerstulpelement montierbar ist, gemäß Oberbegriff des Anspruchs 1.

Ferner betrifft die Erfindung ein Dreh-Kipp-Fenster oder eine Dreh-Kipp-Tür mit einem Treibstangenbeschlag-Montagesatz gemäß Oberbegriff des Anspruchs 1. Zusätzlich bezieht sich die Erfindung auf ein Verfahren zur Montage des gattungsgemäßen Treibstangen-Montagesatzes.

Treibstangenbeschlag-Montagesätze der eingangs genannten Art sind bereits bekannt. Beispielsweise offenbart die EP 0 883 723 B1 einen derartigen Montagesatz, der gekennzeichnet ist durch identische, einseitig ablängbare Verbindungseinheiten zur wahlweisen Verbindung mit einem Treibstangen-Antriebselement, einer Eckumlenkung und einer Oberschiene mit einem Kupplungselement an einem nicht ablenkbaren Ende und mit einem Kupplungsgegenelement an einem ablenkbaren Ende einer Treibstange der Verbindungseinheit. Somit sind bei diesem bekannten Montagesatz die Eckumlenkungen sowie die Getriebe-und Axerstulpelemente längenfest (nicht ablängbar), während die Verbindungselemente eine einzige Grundlänge aufweisen und ablenkbar sind. Nachteilhafterweise ist ein derartiger Montagesatz nicht geeignet, ein montagegünstiges Beschlagen von Flügeln unterschiedlicher Formatgrößen zu gewährleisten, da in der Regel mehrere (mindestens zwei) Verbindungselemente fensterformatabhängig abzulängen sind und gegebenenfalls auch eine verhältnismäßig große Anzahl an Verbindungselementen zwischen einer Eckumlenkung und einem Getriebe- beziehungsweise Axerstulpelement zwischengeschaltet werden müssen unter Ausbildung einer Mehrzahl an grundsätzlich zu vermeidenden Koppelstellen, durch welche die Funktionspräzision beispielsweise eines Dreh-KippFensters negativ beeinträchtigt werden kann.

Es ist Aufgabe der Erfindung, einen Treibstangenbeschlag-Montagesatz der eingangs genannten Art zu schaffen, der zur Beschlagung von unterschiedlichen Flügelformatgrößen in montagefreundlicher Weise gegebenenfalls auch unter Einsatz von Automaten möglich ist. Ferner ist es Aufgabe der Erfindung, ein Dreh-Kipp-Fenster oder eine Dreh-Kipp-Tür mit einem entsprechenden Montagesatz sowie ein Verfahren zur Montage eines entsprechenden Montagesatzes vorzuschlagen.

Zur Lösung der Aufgabe wird ein Treibstangenbeschlag-Montagesatz mit den Merkmalen des Anspruchs 1 vorgeschlagen. Hierbei wird unter einem ganzzahligen Vielfachen eine Zahl größer oder gleich eins verstanden. Es ist hierdurch möglich, mittels einer Kombination von gegebenenfalls geeignet abgelängten Getriebe- und Axerstulpelementen mit unterschiedlich langen Verbindungselementen (längengestaffelte Verbindungselemente) eine vollständige Flügelformatabdeckung zu gewährleisten, während gleichzeitig -unabhängig von der Formatgröße beispielsweise eines Fensterflügels- die Anzahl an zwischen einer Eckumlenkung und einem zugehörigen Getriebe- oder Axerstulpelement zu schaltenden Verbindungselementen und somit auch die entsprechende Anzahl an sich ergebenden Koppelstellen minimiert werden kann. Dabei ist es möglich, in Abhängigkeit der Längenstaffelung der Verbindungselemente vorteilhafterweise die Anzahl der zwischenzuschaltenden Verbindungselemente auf ein einziges Verbindungselement zu reduzieren. Da lediglich ein einziges Getriebe- oder Axerstulpelement für eine entsprechende Flügelseite gegebenenfalls abgelängt werden muss, kann eine Flügelbeschlagung in montagefreundlicher Weise manuell, teilautomatisch oder auch vollautomatisch (unter Einsatz von Automaten) erfolgen. Dabei ist eine hohe Funktionspräzision beispielsweise eines entsprechend beschlagenen Fensters aufgrund der Reduzierung von unerwünschten Spielen, die auf Koppelstellen zwischen miteinander wirkverbundenen Beschlagelementen zurückzuführen sind, erzielbar.

Mit Vorteil entspricht die Längendifferenz zwischen jeweils zwei stafflungsbenachbarten Verbindungselementen der Länge des jeweiligen Ablängbereichs der Getriebe- und Axerstulpelemente. Hierbei bezieht sich der Begriff "staffelungsbenachbarte Verbindungselemente" auf zwei kleinstmögliche Längenunterschiede aufweisende, unterschiedlich lange Verbindungselemente. Bei einem derartig definierten Ablängbereich dient selbiger ausschließlich zur Formatabdeckung, das heißt es liegt kein überschüssiger Ablängbereich der Getriebe- und Axerstulpelemente vor, sondern lediglich ein gegebenenfalls zur Abdeckung möglicher Formatgrößen erforderlicher Abdeckbereich. Dies ermöglicht eine optimale Materialausnutzung der jeweiligen Ablängbereiche.

Erfindungsgemäß ist die Längendifferenz zwischen jeweils zwei stafflungsbenachbarten Verbindungselementen konstant. Eine geeignete Längendifferenzfestlegung hängt insbesondere von den Formatunterschieden der jeweils zu beschlagenden Flügel ab. Ferner ist erfindungsgemäß vorgesehen, dass die ablängbaren Getriebeelemente in einer einzigen Baulänge vorliegen.

Gemäß einer bevorzugten Ausführungsform sind die Ablängbereiche der Getriebe- und Axerstulpelemente gleich lang. Hierdurch ist es möglich, die Anzahl an zu magazinierenden Montagesatzelementen zu reduzieren, da lediglich ein Format an Getriebe-und Axerstulpelementen vorgesehen ist.

Entsprechend einer bevorzugten Ausführungsform weisen die Axerstulpelemente jeweils an beiden Endseiten einen Ablängbereich auf. Eine ein- oder beidseitige Ablängung eines einzigen Beschlagelements gewährleistet eine montagegünstige Beschlagung von Flügeln unterschiedlicher Formatgröße und/oder verschiedener Griffsitzlage.

Gegebenenfalls können die ablängbaren Axerstulpelemente in mehreren, gestaffelten Baulängen vorliegen. Mittels einer derartigen Formatreduzierung kann der Aufwand zur Magazinierung der Beschlagelemente des Montagesatzes merklich reduziert werden.

Der jeweilige Ablängbereich der Getriebe- und Axerstulpelemente kann beispielsweise eine Gesamtlänge von 200 mm aufweisen.

Vorzugsweise entspricht die Länge des kürzesten Verbindungselements der Länge des Ablängbereichs. Alternativ können auch andere Längenverhältnisse zwischen dem kürzesten Verbindungselement und dem Ablängbereich festgelegt werden.

Zur Lösung der Aufgabe wird auch ein Dreh-Kipp-Fenster oder eine Dreh-Kipp-Tür mit den Merkmalen des Anspruchs 8 vorgeschlagen.

Darüber hinaus wird die Aufgabe gelöst mittels eines Verfahrens mit den Merkmalen des Anspruchs 9. Das Verfahren zur Montage des Treibstangenbeschlag-Montagesatzes enthält folgende Verfahrensschritte:
- Bestimmen einer jeweiligen Formatlänge einer Flügelseite eines zu beschlagenden Flügels;
- Auswählen mindestens eines geeigneten Verbindungselements;
- Bestimmen von gegebenenfalls abzulängenden Längen der Ablängbereiche des Getriebe- oder Axerstulpelements;
- gegebenenfalls Ablängen des Getriebe- oder Axerstulpelements um die bestimmten Längen;
- Einbauen der Eckumlenkungen, gegebenenfalls des entsprechenden Verbindungselements und des Getriebe- oder Axerstulpelements am Flügel.

Hierbei sind unterschiedliche Montagenreihenfolgen mit den genannten Verfahrensschritten möglich. Beispielsweise kann die Bestimmung der Formatlänge vor oder nach dem Einbau von Eckumlenkungen erfolgen.

Dabei dient als bevorzugtes Auswählkriterium für ein geeignetes Verbindungselement das jeweils längstmögliche Verbindungselement. Mittels eines derartigen Verfahrens ist eine automatisierte Montage des Treibstangenbeschlag-Montagesatzes unter Einsatz eines geeigneten Automaten in betriebsfreundlicher Weise möglich.

Entsprechend einer bevorzugten Ausführungsvariante sind folgende Verfahrensschritte insbesondere gemäß der folgenden Montagereihenfolge vorgesehen:
- Einbauen mindestens zweier gegenüberliegender Eckumlenkungen an einem Flügel;
- Gegebenenfalls Einbauen mindestens eines zugehörigen Verbindungselements am Flügel;
- Messen der notwendigen Einbaulänge des zugehörigen Getriebe- oder Axerstulpelements;
- Bestimmen der gegebenenfalls abzulängenden Länge des jeweiligen Ablängbereichs des zugehörigen Getriebe- oder Axerstulpelements;
- gegebenenfalls Ablängen des Getriebe- oder Axerstulpelements um die bestimmte Länge;
- Einbauen des Getriebe- oder Axerstulpelements am Flügel.

Ein derartiges Verfahren gewährleistet, dass eine exakte Positionierung der jeweiligen Beschlagselemente und somit auch eine entsprechende Anpassung der Griffsitzlage (Griffsitzhöhe) an einem Fenster beziehungsweise an einer Tür erfolgen kann, wobei pro Flügelseite lediglich ein einziges Mal am Flügel Maß genommen werden muss und gegebenenfalls auch nur ein einziges Bauteil (Getriebeelement oder Axerstulpelement) an die jeweilige Formatgröße des Fenster- oder Türflügels angepasst werden muss.

Die Montage des Treibstangenbeschlag-Montagesatzes kann vollautomatisiert oder teilautomatisiert mittels einer computerunterstützten Montagevorrichtung (Automat) erfolgen. Dabei begünstigt das Verfahren eine schnelle und korrekte Montage einer Baugruppe des Treibstangenbeschlag-Montagesatzes an einem entsprechenden Flügel.

Weitere vorteilhafte Ausgestaltungen der Erfindung ergeben sich aus der Beschreibung.

Die Erfindung wird nachfolgend in einem Ausführungsbeispiel anhand einer zugehörigen Zeichnung näher erläutert. Es zeigen:
- Figur 1: eine schematische Perspektivdarstellung eines Fensters mit Dreh-Kipp-Flügel;
- Figur 2: eine schematische Seitenansicht einer Mehrzahl an längengestaffelten Beschlagelementen eines nicht erfindungsgemäßen Treibstangenbeschlag-Montagesatzes;
- Figur 3: eine schematische Explosionsdarstellung möglicher Beschlagelemente eines Montagesatzes mit nicht abgelängtem Getriebeelement und
- Figur 4: eine schematische Explosionsdarstellung von Beschlagelementen eines Montagesatzes mit abgelängtem Getriebeelement und zwischengeschalteten Verbindungselementen.

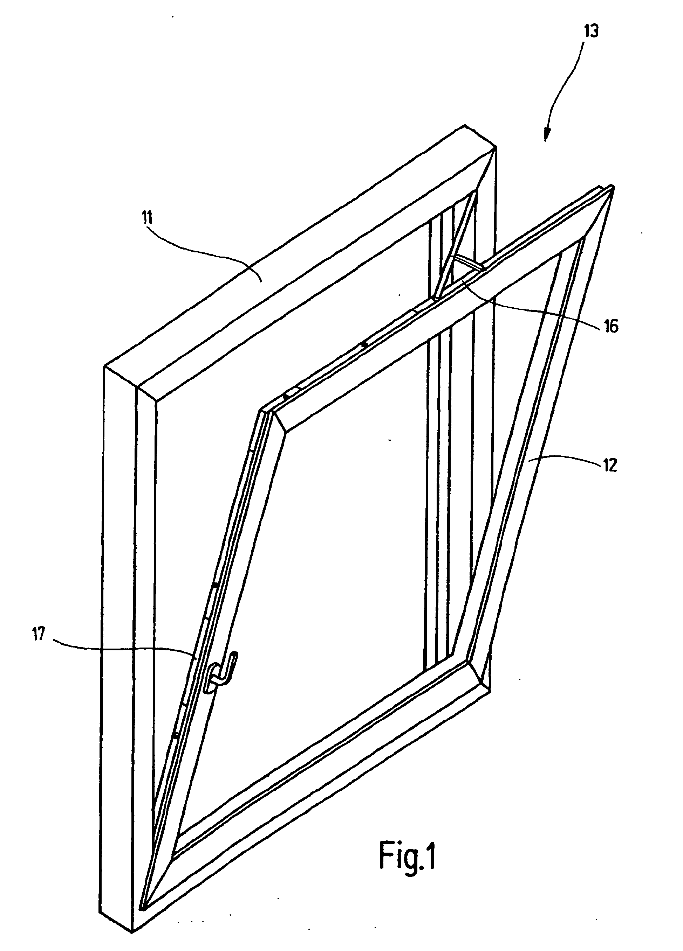

Figur 1 zeigt eine schematische Perspektivdarstellung eines Fensters 13 mit einem Rahmen 11 und einem Dreh-Kipp-Flügel 12.

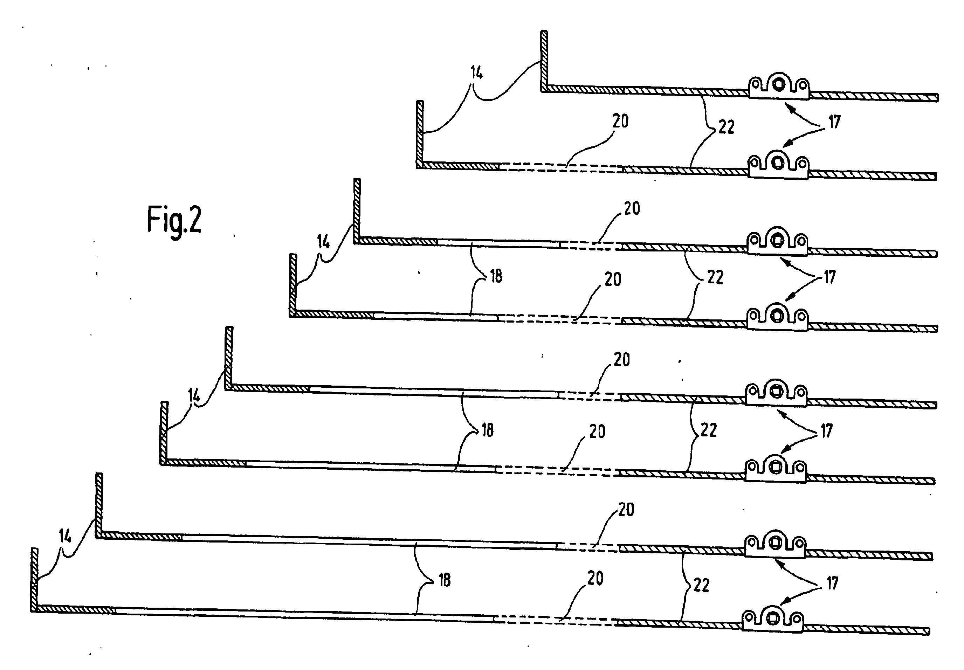

Figur 2 zeigt eine schematische Seitenansicht auf einen Teil eines Treibstangenbeschlag-Montagesatzes 10, der für einen Dreh-Kipp-Flügel 12 gemäß Figur 1 eingesetzt werden kann. Im Ausführungsbeispiel gemäß Figur 2 ist ein Satz an Getriebeelementen 17 dargestellt, wobei selbige jeweils unter eventueller Zwischenschaltung eines geeigneten Verbindungselements 18 mit einer zugehörigen Eckumlenkung 14 zur Erzielung einer definierten Gesamtlänge wirkverbindbar sind. Dabei ist der Treibstangenbeschlag-Montagesatz 10 nicht nur auf Getriebeelemente 17 beschränkt, sondern kann allgemein Getriebe- und Axerstulpelemente 17,16 (siehe auch Figur 1) enthalten und somit konzeptionell in Bezug auf Axerstulpelemente 16 entsprechend Figur 2 aufgebaut sein.

Die Getriebeelemente 17 der Figur 2 sind durch eine an die entsprechende Fensterflügelformatgröße angepasste Einbaulänge gekennzeichnet. Sie sind hierzu gegebenenfalls abgelängt worden. Die Getriebeelemente 17 weisen vor einer eventuellen Ablängung einen Ablängbereich 20 und einen Basisbereich 22 auf, wobei der Basisbereich 22 nicht mittels einer Ablängung zur Flügelformatanpassung längenverändert wird, sondern längenkonstant ist. Der Basisbereich 22 eines jeweiligen Getriebeelements 17 ist in Figur 2 schraffiert dargestellt, während der gegebenenfalls noch vorliegende Ablängbereich 20 desselben Getriebeelements 17 in gestrichelter Linie und nicht schraffiert dargestellt ist. Die Eckelemente 14 gemäß Figur 2 sind form- und längenkonstant sowie zueinander gleichartig ausgebildet. Die gegebenenfalls zwischengeschalteten Verbindungselemente 18 sind ebenfalls längenkonstant, jedoch zueinander längengestaffelt. Im vorliegenden Ausführungsbeispiel gemäß Figur 2 weisen zwei Verbindungselemente eine Länge von 200 mm (drittes und viertes Verbindungselement von oben), zwei weitere Verbindungselemente eine Länge von 400 mm (fünftes und sechstes Verbindungselement von oben) sowie die zwei unteren Verbindungselemente eine Länge 600 mm auf. Dabei sind zur Anpassung an eine gewünschte Fensterflügelformatgröße die Getriebeelemente 17 in geeigneter Weise gegebenenfalls abgelängt, wobei zusätzlich eventuell ein Verbindungselement 18 mit geeigneter Länge zwischenangeordnet ist.

Die Verbindungselemente 18 sind derart längengestaffelt, dass eine Längendifferenz zwischen zwei unterschiedlich langen Verbindungselementen 18 einem ganzzahligen Vielfachen der Länge des Ablängbereichs 20 der Getriebeelemente 17 entspricht. Hierbei wird unter ganzzahligem Vielfachen eine Zahl größer oder gleich eins verstanden. Im vorliegenden Ausführungsbeispiel beträgt die Längendifferenz zwischen zwei unterschiedlich langen und staffelungsbenachbarten Verbindungselementen 18 jeweils 200 mm. Die Länge des Ablängbereichs 20 des Getriebeelements 17 beträgt ebenfalls 200 mm. Der Wert des ganzzahligen Vielfachen gemäß des vorliegenden Ausführungsbeispiels beträgt somit bei staffelungsbenachbarten Verbindungselementen 18 eins.

Entsprechend Figur 2 ist das Getriebeelement 17 in der obersten Baugruppe um den gesamten Ablängbereich 20, das heißt um 200 mm, abgelängt worden, um die gewünschte Fensterflügelformatgröße in Kombination mit der zugehörigen Eckumlenkung 14 abzudecken. Bei der zweitobersten Baugruppe gemäß Figur 2 ist das Getriebeelement 17 nicht abgelängt worden, das heißt es enthält seinen vollständigen Ablängbereich 20 mit einer Länge von 200 mm. Die drittoberste Baugruppe enthält ein um 100 mm abgelängtes Getriebeelement 17 mit einem in Bezug auf die Eckumlenkung 14 zwischengeschalteten Verbindungselement 18, das 200 mm lang ist. Die viertoberste Baugruppe enthält ebenfalls ein Verbindungselement 18 mit der Länge 200 mm, wobei das Getriebeelement 17 nicht abgelängt ist. In der nächst unteren Baugruppe ist ein Verbindungselement mit der Länge 400 mm vorgesehen, wobei das Getriebeelement 17 um 100 mm abgelängt worden ist. Das Getriebeelement 17 der drittuntersten Baugruppe ist nicht abgelängt worden und mit einem Verbindungselement der Länge 400 mm wirkverbunden. Die zweitunterste Baugruppe enthält ein um 100 mm abgelängtes Getriebeelement 17 und ein hinsichtlich der Eckumlenkung 14 zwischengeschaltetes Verbindungselement 18 der Länge 600 mm. Die unterste Baugruppe weist die maximal abdeckbare Länge des Montagesatzes 10 auf und enthält ebenfalls ein Verbindungselement 18 mit 600 mm Länge, jedoch ist das Getriebeelement 17 nicht abgelängt.

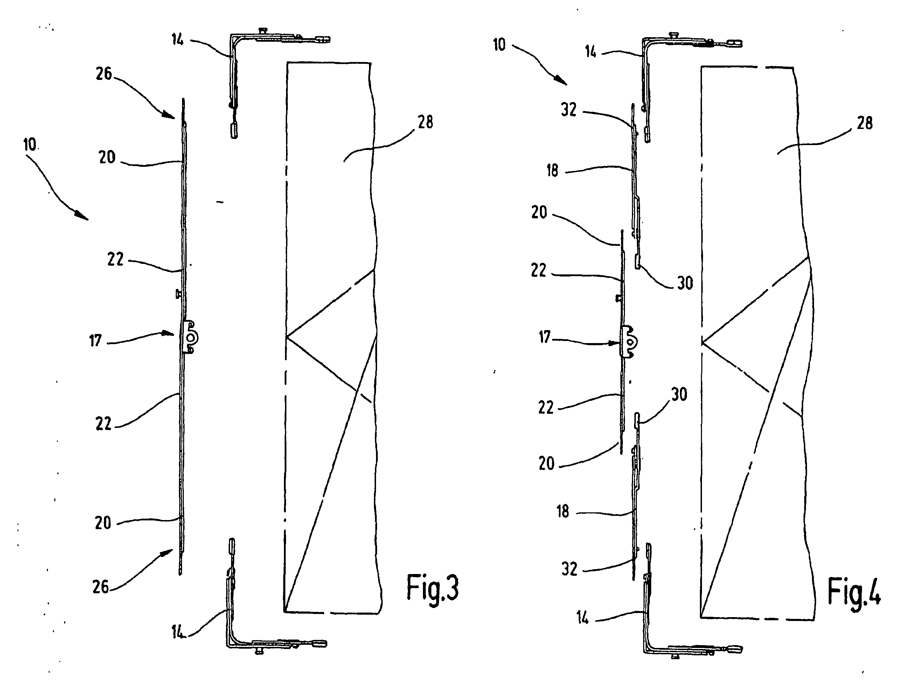

Figur 3 zeigt eine schematische Explosionsdarstellung eines Teils einer Baugruppe eines Treibstangenbeschlag-Montagesatzes 10 für ein Fenster, das symbolisch in Form einer Fensterscheibe 28 dargestellt ist. Die Baugruppe gemäß Figur 3 enthält zwei voneinander beabstandete Eckumlenkungen 14, die mittels eines Getriebeelements 17 miteinander wirkverbindbar sind. Das Getriebeelement 17 weist zwei, sich jeweils zur zugehörigen Eckumlenkung 14 sich erstreckende Basisbereiche 22 und an diese sich anschließende Ablängbereiche 20 auf. Die Ablängbereiche 20 befinden sich somit an einer zugehörigen Endseite 26 des Getriebeelements 17. Bei diesem Ausführungsbeispiel ist das Getriebeelement 17 nicht abgelängt worden, so dass es seine maximal mögliche Einbaulänge aufweist. Ferner ist eine Zwischenschaltung eines Verbindungselements 18 in diesem Ausführungsbeispiel nicht vorgesehen. Somit entspricht die Baugruppe gemäß Figur 3 im Wesentlichen der zweitoberst dargestellten Baugruppe der Figur 2.

Figur 4 zeigt ein weiteres Ausführungsbeispiel einer Baugruppe in Explosionsdarstellung des Treibstangenbeschlag-Montagesatzes 10. Bei diesem Ausführungsbeispiel ist die Fensterscheibe 28 geringfügig länger als diejenige der Figur 3. Da in Figur 3 das Getriebeelement 17 seine maximal mögliche Einbaulänge aufweist, ist es beim Ausführungsbeispiel gemäß Figur 4 notwendig, geeignet ausgebildete Verbindungselemente 18 zwischen ein entsprechend abgelängtes Getriebeelement 17 und eine zugehörige Eckumlenkung 14 anzuordnen. Da die Eckumlenkungen 14 und die Verbindungselemente 18 in Bezug auf ihre Einbaulänge längenkonstant sind, erfolgt zur präzisen Anpassung des Beschlagsystems an die vorliegende Fensterflügelformatgröße eine geeignete Ablängung des Getriebeelements 17 in seinen Ablängbereichen 20. Das in Figur 4 dargestellte Getriebeelement 17 weist hierzu eine jeweilige Ablängbereichslänge auf, die der halben Längendifferenz zwischen den Fensterscheiben 28 der Figuren 4 und 3 entspricht. Das Getriebeelement 17 ist somit innerhalb seiner Ablängbereiche 20 beliebig in Abhängigkeit der jeweils vorliegenden Fensterflügelformatgröße ablängbar. Die nicht ablängbaren Verbindungselemente 18 weisen an einem Ende ein Zahnkästchen 30 zur Herstellung einer Wirkverbindung mit dem Getriebeelement 17 und an ihrem anderen Ende eine zahnlose Aufnahme 32 mit Einführdorn zur Herstellung einer Wirkverbindung mit einer zugehörigen Eckumlenkung 14 auf.

Gegebenenfalls können größere Abstände zwischen einem Getriebeelement 17 und einer zugehörigen Eckumlenkung 14 mittels einer Kombination von mehreren, eventuell verschieden langen und möglichst wenigen (Reduzierung der Koppelstellen) Verbindungselementen 18 abgedeckt werden. Dies ist von Vorteil, da sich sehr lange Verbindungselemente 18 aufgrund der sich einstellenden Durchbiegung nur ungünstig insbesondere automatisiert montieren lassen. Vorzugsweise sind die Getriebeelemente 17 beidseitig mit gezahnten Treibstangen versehen und sie sind beidseitig ablängbar. Ferner sind die Getriebeelemente 17 zur Reduzierung des Magazinierungsaufwands in einer einzigen Baugröße vorgesehen. Dagegen können nicht in den Figuren 2 bis 4 dargestellte Axerstulpelemente 16 gegebenenfalls in unterschiedlichen Längen vorgesehen sein und jeweils nur einen einseitigen Ablängbereich aufweisen, der beliebig ablängbar ist.

## Patentansprüche

1. Treibstangenbeschlag-Montagesatz, insbesondere für einen Dreh-Kipp-Flügel eines Fensters, einer Tür oder dergleichen, enthaltend eine Mehrzahl an Eckumlenkungen, an Getriebe- und Axerstulpelementen (17,16) und an Verbindungselementen (18), wobei entsprechende Verbindungselemente in Abhängigkeit des jeweils vorliegenden Flügelformats zwischen einer Eckumlenkung (14) und einem zugehörigen Getriebeelement (17) sowie einem zugehörigen Axerstulpelement (16) montierbar sind, wobei das Getriebeelement (17) beidseitig ablängbar ist, **dadurch gekennzeichnet, dass** die Getriebeelemente (17) jeweils beidseitig einen Ablängbereich (20) und einen nicht abzulängenden Basisbereich (22) und die Axerstulpelemente (16) jeweils mindestens einen Ablängbereich (20) und einen nicht abzulängenden Basisbereich (22) aufweisen und die Verbindungselemente (18) derart längengestaffelt sind, dass eine Längendifferenz zwischen zwei unterschiedlich langen Verbindungselementen (18) einem ganzzahligen Vielfachen der Länge des Ablängbereichs (20) der Getriebe- und Axerstulpelemente (17,16) entspricht, dass die Längendifferenz zwischen jeweils zwei staffelunqsbenachbarten Verbindungselementen (18) konstant ist und dass die ablängbaren Getriebeelemente (17) in einer einzigen Baulänge vorliegen.

2. Montagesatz nach Anspruch 1, **dadurch gekennzeichnet, dass** die Längendifferenz zwischen jeweils zwei staffelungsbenachbarten Verbindungselementen (18) der Länge des jeweiligen Ablängbereichs (20) der Getriebe- und/oder Axerstulpelemente (17,16) entspricht.

3. Montagesatz nach einem der vorhergehenden Ansprüche, **dadurch gekennzeichnet, dass** die Ablängbereiche (20) der Getriebe- und/oder Axerstulpelemente (17,16) gleich lang sind.

4. Montagesatz nach einem der vorhergehenden Ansprüche, **dadurch gekennzeichnet, dass** die Axerstulpelemente (16) jeweils an beiden Endseiten (26) einen Ablängbereich (20) aufweisen.

5. Montagesatz nach einem der vorhergehenden Ansprüche, **dadurch gekennzeichnet, dass** die ablängbaren Axerstulpelemente (16) in mehreren, gestaffelten Baulängen vorliegen.

6. Montagesatz nach einem der vorhergehenden Ansprüche, **dadurch gekennzeichnet, dass** der jeweilige Ablängbereich (20) der Getriebe- und/oder Axerstulpelemente (17,16) eine Gesamtlänge von 200 mm aufweist.

7. Montagesatz nach einem der vorhergehenden Ansprüche, **dadurch gekennzeichnet, dass** die Länge des kürzesten Verbindungselements (18) der Länge des Ablängbereichs (20) entspricht.

8. Dreh-Kipp-Fenster oder Dreh-Kipp-Tür, versehen mit einem Treibstangenbeschlag-Montagesatz gemäß einem der vorhergehenden Ansprüche.

9. Verfahren zur Montage des Treibstangenbeschlag-Montagesatzes gemäß einem der vorhergehenden Ansprüche, mit folgenden Verfahrensschritten:
- Bestimmen einer jeweiligen Formatlänge einer Flügelseite eines zu beschlagenden Flügels (12);
- Auswählen mindestens eines geeigneten Verbindungselements (18);
- Bestimmen von gegebenenfalls abzulängenden Längen der Ablängbereiche (20) des Getriebe- oder Axerstulpelements (17,16);
- Gegebenenfalls Ablängen des Getriebe- oder Axerstulpelements (17,16) um die bestimmten Längen;
- Einbauen der Eckumlenkungen (14), gegebenenfalls des entsprechenden Verbindungselements (18) und des Getriebe- oder Axerstulpelements (17,16) am Flügel (12).

10. Verfahren nach einem der vorhergehenden Ansprüche, **dadurch gekennzeichnet, dass** das Auswählkriterium für ein geeignetes Verbindungselement (18) das jeweils längstmögliche Verbindungselement (18) ist.

11. Verfahren nach einem der vorhergehenden Ansprüche, **dadurch gekennzeichnet, dass** folgende Verfahrensschritte insbesondere gemäß folgender Montagereihenfolge vorgesehen ist:
- Einbauen mindestens zweier gegenüberliegender Eckumlenkungen (14) an einem Flügel (12);
- Gegebenenfalls Einbauen mindestens eines zugehörigen Verbindungselements (18) am Flügel (12);
- Messen der notwendigen Einbaulänge des zugehörigen Getriebe- oder Axerstulpelements (17,16);
- Bestimmen der gegebenenfalls abzulängenden Länge des jeweiligen Ablängbereichs (20) des zugehörigen Getriebe- oder Axerstulpelements (17,16);
- Gegebenenfalls Ablängen des Getriebe- oder Axerstulpelements (17,16) um die bestimmte Länge;
- Einbauen des Getriebe- oder Axerstulpelements (17,16) am Flügel (12).

12. Verfahren nach einem der vorhergehenden Ansprüche, **dadurch gekennzeichnet, dass** die Montage des Treibstangenbeschlag-Montagesatzes (10) vollautomatisiert oder teilautomatisiert mittels einer computerunterstützten Montagevorrichtung erfolgt.

## Claims

1. Drive rod fitting assembly set, in particular for a pivot-tilt sash of a window, a door or the like, containing a plurality of corner deflectors, linkage and axis changing elements (17, 16) and connecting elements (18), wherein corresponding connecting elements, dependent upon the respectively present sash format, can be mounted between a corner deflector (14) and an associated linkage element (17) as well as an associated axis changing element (16), wherein the linkage element (17) can be cut to length on both sides, **characterised in that** the linkage elements (17) have respectively on both sides one region (20) to be cut to length and one base region (22) which is not to be cut to length and the axis changing elements (16) have respectively at least one region (20) to be cut to length and one base region (22) which is not to be cut to length and the connecting elements (18) are graduated in length in such a manner that a length difference between two connecting elements (18) of different lengths corresponds to an integral multiple of the length of the region (20) to be cut to length of the linkage and axis changing elements (17, 16), that the length difference between respectively two connecting elements (18), which are adjacent in the graduation, is constant and that the linkage elements (17), which can be cut to length, are present in a single constructional length.

2. Assembly set according to claim 1, **characterised in that** the length difference between respectively two connecting elements (18), which are adjacent in the graduation, corresponds to the length of the respective region (20) to be cut to length of the linkage and/or axis changing elements (17, 16).

3. Assembly set according to one of the preceding claims, **characterised in that** the regions (20) to be cut to length of the linkage and/or axis changing elements (17, 16) are of equal length.

4. Assembly set according to one of the preceding claims, **characterised in that** the axis changing elements (16) have a region (20) to be cut to length respectively at both end sides (26).

5. Assembly set according to one of the preceding claims, **characterised in that** the axis changing elements (16) which can be cut to length are present in a plurality of graduated constructional lengths.

6. Assembly set according to one of the preceding claims, **characterised in that** the respective region (20) to be cut to length of the linkage and/or axis changing elements (17, 16) has a total length of 200 mm.

7. Assembly set according to one of the preceding claims, **characterised in that** the length of the shortest connecting element (18) corresponds to the length of the region (20) to be cut to length.

8. Pivot-tilt window or pivot-tilt door, provided with a drive rod fitting assembly set according to one of the preceding claims.

9. Method for assembling the drive rod fitting assembly set according to one of the preceding claims, having the following method steps:
- determination of a respective format length of a sash side of a sash (12) to receive the fitting;
- selection of at least one suitable connecting element (18);
- determination of lengths of the regions (20) to be cut to length of the linkage or axis changing element (17, 16) which are if necessary to be cut to length;
- if necessary cutting to length of the linkage or axis changing element (17, 16) by the specified lengths;
- incorporation of corner deflectors (14), if necessary of the corresponding connecting element (18) and of the linkage or axis changing element (17, 16) on the sash (12).

10. Method according to one of the preceding claims, **characterised in that** the connecting element (18) which is respectively as long as possible is the selection criterion for a suitable connecting element (18).

11. Method according to one of the preceding claims, **characterised in that** the following method steps are provided in particular according to the following assembly sequence:
- incorporation of at least two oppositely-situated corner deflectors (14) on one sash (12);
- if necessary incorporation of at least one associated connecting element (18) on the sash (12);
- measurement of the required installation length of the associated linkage or axis changing element (17, 16);
- determination of the length of the respective region (20) to be cut to length of the associated linkage or axis changing element (17, 16) which is if necessary to be cut to length;
- if necessary cutting to length of the linkage or axis changing element (17, 16) by the specified length;
- incorporation of the linkage or axis changing element (17, 16) on the sash (12).

12. Method according to one of the preceding claims, **characterised in that** the assembly of the drive rod fitting assembly set (10) is effected in a fully automated or partially automated manner by means of a computer-assisted assembly device.

## Revendications

1. Ensemble de montage de tiges d'actionnement, en particulier pour un châssis oscillo-battant d'une fenêtre, d'une porte ou similaire, comprenant une pluralité de renvois d'angle, d'éléments d'engrenage et d'axe à embouti (17, 16) et d'éléments de jonction (18), dans lequel des éléments de jonction (18) correspondants peut être montes en fonction du format de châssis respectif entre un renvoi d'angle (14) et un élément d'engrenage (17) associé ainsi qu'un élément d'axe à embouti (16) associé, dans lequel l'élément d'engrenage (17) peut être couper à longueur des deux côtés, **caractérisé en ce que** les éléments d'engrenage (17) présentent respectivement des deux côtés une zone à couper à longueur (20) et une zone de base (22) non à couper à longueur et les éléments d'axe (16) à embouti présentent respectivement au moins une zone à couper à longueur (20) et une zone de base (22) non à couper à longueur, et les éléments de jonction (18) sont échelonnés en longueur de telle sorte qu'une différence de longueur entre deux éléments de jonction (18) de longueurs différentes correspond à un multiple entier de la longueur de la zone à couper à longueur (20) des éléments d'engrenage et d'axe à embouti (17, 16), que la différence de longueur entre respectivement deux éléments de jonction (18) échelonnés voisins est constante et que les éléments d'engrenage (17) à couper à longueur sont présents dans une seule longueur.

2. Ensemble de montage selon la revendication 1, **caractérisé en ce que** la différence de longueur entre respectivement deux éléments de jonction (18) échelonnés voisins correspond à la longueur de la zone à couper à longueur (20) respective des éléments d'engrenage et/ou d'axe à embouti (17, 16).

3. Ensemble de montage selon l'une quelconque des revendications précédentes, **caractérisé en ce que** les zones à couper à longueur (20) des éléments d'engrenage et/ou d'axe à embouti (17, 16) présentent la même longueur.

4. Ensemble de montage selon l'une quelconque des revendications précédentes, **caractérisé en ce que** les éléments d'axe à embouti (16) présentent respectivement une zone à couper à longueur (20) au niveau des deux faces terminales (26).

5. Ensemble de montage selon l'une quelconque des revendications précédentes, **caractérisé en ce que** les éléments d'axe à embouti (16) à couper à longueur sont présents dans plusieurs longueurs hors tout échelonnées.

6. Ensemble de montage selon l'une quelconque des revendications précédentes, **caractérisé en ce que** la zone à couper à longueur (20) respective des éléments d'engrenage et/ou d'axe à embouti (17, 16) présente une longueur totale de 200 mm.

7. Ensemble de montage selon l'une quelconque des revendications précédentes, **caractérisé en ce que** la longueur de l'élément de jonction (18) le plus court correspond à la longueur de la zone à couper à longueur (20).

8. Fenêtre oscillo-battante ou porte oscillo-battante munie d'un ensemble de montage de tiges d'actionnement selon l'une quelconque des revendications précédentes.

9. Procédé de montage de l'ensemble de montage de tiges d'actionnement selon l'une quelconque des revendications précédentes, comprenant les étapes de procédé suivantes :
- définition d'une longueur de format respective d'un côté de châssis d'un châssis (12) à armer ;
- choix d'au moins un élément de jonction (18) approprié;
- définition de longueurs le cas échéant à couper des zones à couper à longueur (20) de l'élément d'engrenage ou d'axe à embouti (17, 16) ;
- le cas échéant coupe de l'élément d'engrenage ou d'axe à embouti (17, 16) à des longueurs définies ;
- mise en place des renvois d'angle (14), le cas échéant de l'élément de jonction (18) correspondant et de l'élément d'engrenage ou d'axe à embouti (17, 16) sur le châssis (12).

10. Procédé selon l'une quelconque des revendications précédentes, **caractérise en ce que** le critère de choix d'un élément de jonction (18) approprié est l'élément de jonction (18) respectivement le plus long possible.

11. Procédé selon l'une quelconque des revendications précédentes, **caractérisé en ce que** les étapes de procédé suivantes sont prévues en particulier dans l'ordre de montage suivant:
- mise en place d'au moins deux renvois d'angle (14) situés opposés sur un châssis (12) ;
- le cas échéant, mise en place d'au moins un élément de jonction (18) associé sur le châssis (12) ;
- mesure de la longueur hors tout nécessaire de l'élément d'engrenage ou d'axe à embouti (17, 16) associé ;
- définition de la longueur le cas échéant à couper de la zone à couper à longueur (20) respective de l'élément d'engrenage ou d'axe à embouti (17, 16) associé ;
- le cas échéant, coupe de l'élément d'engrenage ou d'axe à embouti (17, 16) à la longueur définie ;
- mise en place de l'élément d'engrenage ou d'axe à embouti (17, 16) sur le châssis (12).

12. Procédé selon l'une quelconque des revendications précédentes, **caractérisé en ce que** le montage de l'ensemble de montage de tiges d'actionnement (10) s'effectue de manière entièrement ou partiellement automatisée au moyen d'un dispositif de montage assisté par ordinateur.
